# EUROPÄISCHE PATENTSCHRIFT

(11) **EP 3 883 274 B1**
(45) Veröffentlichungstag und Bekanntmachung des Hinweises auf die Patenterteilung: **30.08.2023**
(21) Anmeldenummer: 21159486.6
(22) Anmeldetag: 26.02.2021
(51) Int. Cl.: H04W 4/46

(54) **VERFAHREN ZUR KOMMUNIKATION ZUM BETREIBEN EINES FAHRZEUG-PLATOONS**
METHOD OF COMMUNICATION FOR OPERATING A VEHICLE PLATOON
PROCÉDÉ DE COMMUNICATION PERMETTANT DE FAIRE FONCTIONNER UN PELOTON DE VÉHICULES

(30) Priorität: 18.03.2020 DE 102020107488
(43) Veröffentlichungstag der Anmeldung: 22.09.2021
(73) Patentinhaber: MAN Truck & Bus SE, 80995 München (DE)
(72) Erfinder: Alieiev, Roman, 80995 München (DE)
(74) Vertreter: v. Bezold & Partner Patentanwälte - PartG mbB

(56) Entgegenhaltungen:
- WO-A1-2020/024251
- SE-A1- 1 851 238
- HASROUNY HAMSSA ET AL: "Trust model for secure group leader-based communications in VANET", WIRELESS NETWORKS, ACM, 2 PENN PLAZA, SUITE 701 - NEW YORK USA, Bd. 25, Nr. 8, 17. Mai 2018 (2018-05-17), Seiten 4639-4661, XP036924838, ISSN: 1022-0038, DOI: 10.1007/S11276-018-1756-6 [gefunden am 2018-05-17]

## Beschreibung

Die Erfindung betrifft Verfahren zur Kommunikation zum Betreiben eines Fahrzeug-Platoons, insbesondere zum Ermöglichen einer Identifizierung von Fahrzeugen des Fahrzeug-Platoons während der Kommunikation.

Kraftstoffverbrauch und CO2-Emissionen bei Fahrzeugen, die beispielsweise im Fernverkehr im Einsatz sind, sind zu einem überwiegenden Anteil durch den Luftwiderstand und unkoordiniertes Fahren (Beschleunigen, Bremsen) verursacht. Hinreichend dicht hintereinander- und koordiniertfahrende Fahrzeuge können ihren Verbrauch und ihre Emissionen erheblich reduzieren, da der Luftwiderstand nur am ersten Fahrzeug des Fahrzeugverbands (der auch als "Platoon" bezeichnet wird) in vollem Umfang zum Tragen kommt. Trotz der dicht aufeinanderfolgenden Fahrzeuge im Fahrzeugverband kann eine hohe Sicherheit gegen Auffahrunfälle erreicht werden, indem die Fahrzeuge miteinander kommunizieren (d. h. "vernetzt bzw. elektronisch gekoppelt") sind, beispielsweise zum automatisierten und zeitgleichen Abbremsen der Fahrzeuge.

Im Fahrzeug-Platoon müssen die Fahrzeuge effizient miteinander kommunizieren, indem sie sich gegenseitig Nachrichten senden, z. B. über direkte Fahrzeug-zu-Fahrzeug-Kommunikation (V2V bzw. C2C) beispielsweise mittels WLANp. Das Sender-Fahrzeug muss hierbei von den Empfänger-Fahrzeugen identifiziert werden, um die empfangenen Informationen richtig zuordnen zu können.

Die SE 1 851 238 A1 offenbart Verfahren und Kommunikationsvorrichtungen zum Ermöglichen der Erkennung der ersten Kommunikationsvorrichtung durch eine zweite Kommunikationsvorrichtung, die einen geheimen Wert mit der ersten Kommunikationsvorrichtung teilt. Das Verfahren umfasst die folgenden Schritte: Erhalten einer öffentlichen Identitätsreferenz der ersten Kommunikationsvorrichtung; Erzeugen eines Hash, der die erhaltene öffentliche Identitätsreferenz und den gemeinsam genutzten geheimen Wert umfasst; und Senden einer Nachricht, die die erhaltene öffentliche Identitätsreferenz (und den erzeugten Hash umfasst, wodurch es der zweiten Kommunikationsvorrichtung ermöglicht wird, die erste Kommunikationsvorrichtung zu erkennen.

Die WO 2020/024251 A1 offenbart Verfahren, ein Benutzergerät und eine Basisstation für die Sidelink-Identifikation. Gemäß einer Ausführungsform nimmt ein erstes Benutzergerät an einem Identitätsbestimmungsverfahren teil, so dass eine Sidelink-ID für einen Sidelink zwischen dem ersten Benutzergerät und einem zweiten Benutzergerät bestimmt wird. Die Sidelink-ID umfasst eine vollständige ID zur Identifizierung eines der ersten und zweiten Benutzergeräte und eine kurze ID zur Identifizierung des anderen der ersten und zweiten Benutzergeräte.

Zum Stand der Technik wird ferner auf Hasrouny Hamssa et al "Trust model for secure group leader-based communications in VANET", Wireless Networks, Band 25: Seiten 4639-4661 hingewiesen. VANET soll die Sicherheit für alle Verkehrsteilnehmer verbessern. Fahrzeuge tauschen Sicherheitsmeldungen über drahtlose Kommunikationsverbindungen aus, die anfällig für zahlreiche Angriffe sind. Um die bestehende Sicherheit der V2V-Kommunikation zu verbessern, wird ein Sicherheitsrahmen vorgeschlagen, der auf der Analyse des Fahrzeugverhaltens basiert. Es wird ein hybrides Vertrauensmodell und ein System zur Erkennung von Fehlverhalten, bei dem jedem Fahrzeug je nach seinem Verhalten eine Vertrauensmetrik zugewiesen wird, vorgeschlagen.

Der Erfindung liegt die Aufgabe zu Grunde, verbesserte Verfahren zur Kommunikation zum Betreiben eines Fahrzeug-Platoons zu schaffen.

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt der vorliegenden Offenabrung betrifft ein Verfahren zur Kommunikation zum Betreiben eines Fahrzeug-Platoons. Das Verfahren weist ein Erstellen eines temporären Fahrzeugidentifikationskennzeichens durch ein Sender-Fahrzeug des Fahrzeug-Platoons auf. Das Verfahren weist ein Erstellen einer Platoon-Nachricht an das Fahrzeug-Platoon durch das Sender-Fahrzeug auf, wobei die Platoon-Nachricht das temporäre Fahrzeugidentifikationskennzeichen zum Identifizieren des Sender-Fahrzeugs als Sender der Platoon-Nachricht aufweist. Das Verfahren weist ein Versenden der Platoon-Nachricht durch das Sender-Fahrzeug an das Fahrzeug-Platoon (z. B. die anderen Fahrzeuge des Fahrzeug-Platoons) auf.

Die Verwendung des temporären Fahrzeugidentifikationskennzeichens kann eine effizientere Kommunikation zwischen den Fahrzeugen des Fahrzeug-Platoons ermöglichen. Die temporären Fahrzeugindikationskennzeichen können vergleichsweise kurz sein bzw. eine kleine Datenmenge aufweisen, da keine global eindeutige Unterscheidbarkeit der Fahrzeuge notwendig ist, sondern lediglich eine lokale Unterscheidbarkeit, zum Beispiel nur innerhalb des Fahrzeug-Platoons. Würden die Fahrzeugidentifikationskennzeichen hingegen dauerhaft verwendet werden, so müssten sie länger sein, um eine eindeutige Unterscheidbarkeit aller Fahrzeuge (zum Beispiel weltweit) zu ermöglichen. Da die Fahrzeugidentifikationskennzeichen nur temporär gelten, kann zudem ein unautorisiertes Tracking der Kommunikation des Fahrzeug-Platoons bzw. einzelner Fahrzeuge des Fahrzeug-Platoons zumindest deutlich erschwert werden.

Zweckmäßig kann sich der Ausdruck "Platoon-Nachricht" auf eine Platoon-relevante Nachricht beziehen, z. B. zwischen Fahrzeugen des Fahrzeug-Platoons oder beim Anschließen eines weiteren Fahrzeugs an das Fahrzeug-Platoon.

In einem Ausführungsbeispiel wird das Erstellen des temporären Fahrzeugidentifikationskennzeichens fortwährend wiederholt, und das neu erstellte temporäre Fahrzeugidentifikationskennzeichen ersetzt das jeweils zuvor erstellte temporäre Fahrzeugidentifikationskennzeichen.

In einer Weiterbildung wird das Erstellen des temporären Fahrzeugidentifikationskennzeichens jeweils nach Eintritt einer vorbestimmten Bedingung wiederholt. Vorzugsweise kann die die vorbestimmte Bedingung ein Verstreichen einer vorbestimmten Zeit, vorzugsweise ≤ 30 min, ≤ 15 min, ≤ 10 min, ≤ 5 min, ≤ 3 min, ≤ 90 s oder ≤ 60 s; und/oder ein Zurücklegen einer vorbestimmten Strecke durch das Sender-Fahrzeug oder das Fahrzeug-Platoon; und/oder ein Anlassen des Sender-Fahrzeugs; und/oder ein Wechseln eines Sicherheitszertifikats des Sender-Fahrzeugs, vorzugsweise zur signierten und/oder verschlüsselten Kommunikation, aufweisen.

In einem weiteren Ausführungsbeispiel wird das Wiederholen des Erstellens des temporären Fahrzeugidentifikationskennzeichens, vorzugsweise für eine vorbestimmte Zeitdauer, ausgesetzt, wenn das Sender-Fahrzeug ein Auftreten einer verkehrssicherheitskritischen und/oder platoonverändernden Situation für das Fahrzeug-Platoon und/oder das Sender-Fahrzeug ermittelt, empfängt oder erfasst. In solchen kritischen Situationen kann somit eine besonders zuverlässige Kommunikation zwischen den Fahrzeugen des Fahrzeug-Platoons ermöglicht werden, die nicht durch Wechsel der temporären Fahrzeugidentifikationskennzeichen der Fahrzeuge des Fahrzeug-Platoons beeinträchtigt wird.

In einem weiteren Ausführungsbeispiel weist die Platoon-Nachricht zusätzlich das zuvor erstellte temporäre Fahrzeugidentifikationskennzeichen zum Identifizieren des Sender-Fahrzeugs als Sender der Platoon-Nachricht auf. Damit kann von den Empfänger-Fahrzeugen des Fahrzeug-Platoons leichter nachvollzogen werden, wenn das Sender-Fahrzeug sein temporäres Fahrzeugidentifikationskennzeichen gewechselt hat. Sofern die Kommunikation im Fahrzeug-Platoon bspw. verschlüsselt abläuft, wäre das Mitsenden der zuvor erstellten temporären Fahrzeugidentifikationskennzeichen auch im Hinblick auf eine ungewünschte Rückverfolgung (Tracking) unproblematisch.

In einer Ausführungsform weist das Verfahren ferner ein Ermitteln einer geografischen Position des Sender-Fahrzeugs (z. B. mittels einer Standortbestimmungsvorrichtung des Sender-Fahrzeugs) auf. Das Verfahren kann ferner ein Versenden einer Leitstellen-Nachricht an eine Platoon-Leitstelle aufweisen, wobei die Leitstellen-Nachricht einen Identifikationsabschnitt zur Identifikation des Sender-Fahrzeugs aufweist, und der Identifikationsabschnitt das temporäre Fahrzeugidentifikationskennzeichen und die erfasste geografische Position des Sender-Fahrzeugs aufweist. Somit kann das für die Platoon-Nachricht verwendete temporäre Fahrzeugidentifikationskennzeichen vorteilhaft auch zum Identifizieren des Sender-Fahrzeugs gegenüber der Platoon-Leitstelle genutzt werden.

Ein weiterer Aspekt der vorliegenden Offenbarung betrifft ebenfalls ein Verfahren zur Kommunikation zum Betreiben eines Fahrzeug-Platoons. Das Verfahren weist ein Empfangen einer Platoon-Nachricht von einem Sender-Fahrzeug des Fahrzeug-Platoons durch ein Empfänger-Fahrzeug des Fahrzeug-Platoons auf, wobei die Platoon-Nachricht ein temporäres Fahrzeugidentifikationskennzeichen des Sender-Fahrzeugs des Fahrzeug-Platoons aufweist. Das Verfahren weist ein Identifizieren des Sender-Fahrzeugs als Sender der Platoon-Nachricht durch das Empfänger-Fahrzeug basierend auf dem temporären Fahrzeugidentifikationskennzeichen der Platoon-Nachricht auf.

In einer Weiterbildung weist die Platoon-Nachricht zusätzlich ein vorheriges temporäres Fahrzeugidentifikationskennzeichen des Sender-Fahrzeugs des Fahrzeug-Platoons auf. Das Identifizieren des Sender-Fahrzeugs als Sender der Platoon-Nachricht durch das Empfänger-Fahrzeug kann zusätzlich auf dem vorherigen temporären Fahrzeugidentifikationskennzeichen basieren.

Ein weiterer Aspekt der vorliegenden Offenbarung betrifft ebenfalls ein Verfahren zur Kommunikation zum Betreiben eines Fahrzeug-Platoons. Das Verfahren weist ein Empfangen einer Leitstellen-Nachricht von einem Sender-Fahrzeug des Fahrzeug-Platoons durch eine Platoon-Leitstelle auf, wobei die Leitstellen-Nachricht einen Identifikationsabschnitt zur Identifikation des Sender-Fahrzeugs aufweist, und der Identifikationsabschnitt ein temporäres Fahrzeugidentifikationskennzeichen des Sender-Fahrzeugs und eine geografische Position des Sender-Fahrzeugs aufweist. Das Verfahren weist ein Identifizieren des Sender-Fahrzeugs durch die Platoon-Leitstelle basierend auf dem temporären Fahrzeugidentifikationskennzeichen und der geografischen Position der Leitstellen-Nachricht auf.

In einer Weiterbildung weist der Identifikationsabschnitt zusätzlich mindestens ein vorheriges temporäres Fahrzeugidentifikationskennzeichen des Sender-Fahrzeugs auf, und das Identifizieren des Sender-Fahrzeugs basiert zusätzlich auf dem mindestens einen vorherigen temporären Fahrzeugidentifikationskennzeichen.

In einem Ausführungsbeispiel ist das temporäre Fahrzeugidentifikationskennzeichen ungleich zu einer globalen eindeutigen Fahrzeugidentifikationsnummer des Sender-Fahrzeugs, vorzugweise kürzer als die globale eindeutige Fahrzeugidentifikationsnummer. Alternativ oder zusätzlich ist das temporäre Fahrzeugidentifikationskennzeichen ≤ 8-stellig, ≤ 7-stellig, ≤ 6-stellig, ≤ 5-stellig oder ≤ 4-stellig.

Erfindungsgemäß ist die Platoon-Nachricht oder die Leitstellen-Nachricht mittels eines temporären Sicherheitszertifikats des Sender-Fahrzeugs signiert. Das temporäre Fahrzeugidentifikationskennzeichen kann von dem temporären Sicherheitszertifikat abgeleitet sein, vorzugsweise von einer Kennung des temporären Sicherheitszertifikats (z. B. = Kennung des temporären Sicherheitszertifikats oder niederwertigste Bytes der Kennung des temporären Sicherheitszertifikats). Vorzugsweise kann das temporäre Sicherheitszertifikat des Sender-Fahrzeugs fortwährend ausgetauscht werden, und das temporäre Fahrzeugidentifikationskennzeichen jeweils vom aktuellen temporären Sicherheitszertifikat abgeleitet sein.

In einer Ausführungsform weist die Platoon-Nachricht oder die Leitstellen-Nachricht zusätzlich ein Platoon-Identifikationskennzeichen zum Identifizieren des Fahrzeugs-Platoons des Sender-Fahrzeugs auf. Vorzugsweise kann das Platoon-Identifikationskennzeichen von einem früheren temporären Fahrzeugidentifikationskennzeichen eines Führungsfahrzeugs des Fahrzeug-Platoons abgeleitet sein oder diesem entsprechen.

In einer Weiterbildung kann das Verfahren ein Empfangen der Platoon-Nachricht durch mindestens ein weiteres Fahrzeug oder ein weiteres Fahrzeug-Platoon, das beabsichtigt, an das Fahrzeug-Platoon anzukoppeln, oder das gerade an das Fahrzeug-Platoon ankoppelt, aufweisen, wobei das mindestens eine weitere Fahrzeug oder das weitere Fahrzeug-Platoon das Platoon-Identifikationskennzeichen und/oder das temporäre Fahrzeugidentifikationskennzeichens zum Identifizieren des Fahrzeug-Platoons zum Einholen oder Prüfen einer Erlaubnis zum Ankoppeln an das Fahrzeug-Platoon verwendet.

Ein weiterer Aspekt der vorliegenden Offenbarung betrifft eine Steuereinheit für ein Kraftfahrzeug, vorzugsweise ein Nutzfahrzeug, oder eine Platoon-Leitstelle, wobei die Steuereinheit dazu ausgebildet ist, ein Verfahren wie hierin offenbart auszuführen.

Vorzugsweise kann sich der Begriff "Steuereinheit" auf eine Elektronik (z. B. mit Mikroprozessor(en), Datenspeicher, Kommunikationsschnittstelle usw.) beziehen.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügte Zeichnung beschrieben. Es zeigt:

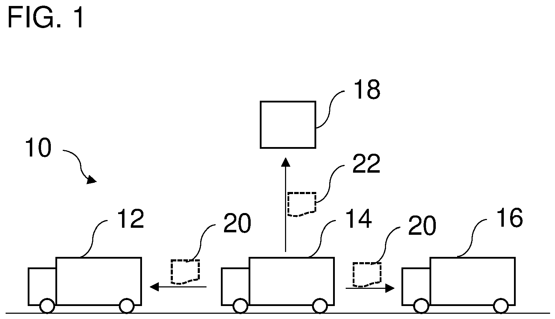

- Figur 1: eine schematische Darstellung eines Fahrzeug-Platoons.

In Figur 1 ist ein Fahrzeug-Platoon 10 dargestellt. Das Fahrzeug-Platoon 10 weist mehrere Fahrzeuge 12, 14, 16 auf. Die Fahrzeuge 12, 14, 16 sind Nutzfahrzeuge, vorzugsweise Lastkraftwagen oder Omnibusse. Es ist auch möglich, dass die Fahrzeuge 12 zumindest teilweise andere Kraftfahrzeuge sind, zum Beispiel Personenkraftwagen. Das Fahrzeug-Platoon 10 kann mindestens zwei Fahrzeuge aufweisen.

Die Fahrzeuge 12, 14, 16 des Fahrzeug-Platoons 10 sind elektronisch miteinander gekoppelt (elektronische Deichsel). Die Fahrzeuge 12, 14, 16 des Fahrzeug-Platoons 10 können so in einem sehr geringen Abstand hintereinanderfahren, ohne dass die Verkehrssicherheit beeinträchtigt wird.

Zum Ermöglichen des Fahrzeug-Platoon 10 kommunizieren die Fahrzeuge 12, 14, 16 miteinander und/oder mit einer Platoon-Leitstelle 18. Hierbei können verschiedenste Informationen ausgetauscht werden, zum Beispiel Sensorinformationen, Positionsinformationen, Trajektorie-Informationen, Betriebsinformationen, Planungsinformationen usw. Die Fahrzeuge 12 des Fahrzeug-Platoons 10 können sich untereinander, vorzugsweise verschlüsselte und/oder signierte, Nachrichten mit den jeweils relevanten Informationen senden. Die Nachrichten können beispielsweise über WLAN oder Bluetooth zwischen der Fahrzeugen 12, 14 und 16 übertragen werden. Die Kommunikation mit der Platoon-Leitstelle 18 kann bspw. über Mobilfunk oder Internet erfolgen. Die Kommunikation kann von entsprechend ausgebildeten Steuereinheiten der Fahrzeuge 12, 14, 16 und der Platoon-Leitstelle 18 gesteuert sein.

Beispielsweise kann ein Sender-Fahrzeug 14 an die Empfänger-Fahrzeuge 12, 16 eine Platoon-Nachricht 20 und/oder an die Platoon-Leitstelle 18 eine Leitstellen-Nachricht 22 versenden. Damit die Empfänger-Fahrzeuge 12, 16 oder die Platoon Leitstelle-18 identifizieren können, dass das Sender-Fahrzeug 14 die Nachricht 20, 22 versandt hat, kann die Nachricht 20, 22 entsprechende Identifizierungsmerkmale aufweisen.

Die Fahrzeuge 12, 14, 16 des Fahrzeug-Platoons 10 erstellen für die Kommunikation jeweils ein eigenes temporäres Fahrzeugidentifikationskennzeichen, das das jeweilige Fahrzeug 12, 14 oder 16 identifizierbar macht. Wenn ein Fahrzeug 12, 14, 16 des Fahrzeug-Platoons 10 eine Platoon-Nachricht 20 erstellt, wird das jeweilige temporäre Fahrzeugidentifikationskennzeichen des jeweiligen Fahrzeugs, zum Beispiel das Sender-Fahrzeugs 14, in der Platoon Nachricht 20 aufgenommen. Die Platoon-Nachricht 20 kann dann von dem Sender-Fahrzeug-14 versandt werden.

Die Empfänger-Fahrzeuge 12, 16 können die Platoon-Nachricht 20 empfangen. Die Empfänger-Fahrzeuge 12, 16 können anhand des temporären Fahrzeugindikationskennzeichen der Platoon-Nachricht 20 das Sender-Fahrzeug 14 als den Sender der Platoon-Nachricht 20 identifizieren. Die in der Platoon-Nachricht 20 zusätzlich enthaltenen Informationen können somit dem Sender-Fahrzeug 14 zugeordnet werden und entsprechen auf ihre Relevanz für das jeweilige Empfänger-Fahrzeug 12, 16 hin ausgewertet werden.

Es ist möglich, dass die Platoon-Nachricht 20 an das gesamte Fahrzeug-Platoon 10 versandt wird und/oder keine Angabe bzgl. eines spezifischen Empfänger-Fahrzeugs des Fahrzeug-Platoons 10 aufweist.

Das temporäre Fahrzeugidentifikationskennzeichen kann jeweils von dem Sender-Fahrzeug 14 erstellt werden. Da das temporäre Fahrzeugidentifikationskennzeichen nur temporär gilt, kann es fortwährend wiederholt erstellt werden. Das jeweils neu erstellte Fahrzeugidentifikationskennzeichen (= aktuelles Fahrzeugidentifikationskennzeichen) ersetzt das zuvor erstellte Fahrzeugidentifikationskennzeichen (= vorheriges Fahrzeugidentifikationskennzeichen).

Das Wiederholen des Erstellens kann bspw. immer dann durchgeführt werden, wenn eine vorbestimmte Bedingung eintritt. Die vorbestimmte Bedingung kann bspw. ein Zeitablauf ab Erstellen des letzten Fahrzeugidentifikationskennzeichens sein (z. B. ≤ 30 min, ≤ 15 min, ≤ 10 min, ≤ 5 min, ≤ 3 min, ≤ 90 s oder ≤ 60 s). Die vorbestimmte Bedingung kann bspw. ein Zurücklegen einer vorbestimmten Strecke (z. B. x km) durch das Sender-Fahrzeug 14 oder das Fahrzeug-Platoon 10 sein. Die vorbestimmte Bedingung kann ein Anlassen bzw. Starten des Sender-Fahrzeugs 14 sein. Es ist beispielsweise auch möglich, dass die vorbestimmte Bedingung ein (z. B. automatischer) Wechsel eines Sicherheitszertifikats des Sender-Fahrzeugs 14 ist.

Damit ein Wechsel des temporären Fahrzeugidentifikationskennzeichens von den anderen Fahrzeugen des Fahrzeug-Platoons 10 nachvollzogen werden kann, ist es bspw. möglich, beim Wechsel des Fahrzeugidentifikationskennzeichens mindestens eine entsprechende Platoon-Nachricht 20 an die Empfänger-Fahrzeuge 12, 16 zu versenden. Es ist bspw. möglich, dass beim Wechsel des temporären Fahrzeugidentifikationskennzeichens für einen Übergangszeitraum und/oder für eine vorbestimmte Anzahl von Platoon-Nachrichten 20 des Sender-Fahrzeugs 14 jede Platoon-Nachricht 20 neben dem aktuellen Fahrzeugidentifikationskennzeichen zusätzlich mindestens das vorherige bzw. zuvor erstellte Fahrzeugidentifikationskennzeichen oder mehr aufweist.

Das temporäre Fahrzeugidentifikationskennzeichen kann zweckmäßig ungleich zu einer globalen eindeutigen Fahrzeugidentifikationsnummer (engl. VIN = vehicle identification number) des Sender-Fahrzeugs 14 sein. Diese globale eindeutige Fahrzeugidentifikationsnummer ist beispielsweise 17-stellig. Zum Ermöglichen einer effizienteren und weniger leicht nachvollziehbaren Kommunikation kann das temporäre Fahrzeugidentifikationskennzeichen vorzugweise kürzer als die globale eindeutige Fahrzeugidentifikationsnummer sein (z. B. ≤ 8-stellig, ≤ 7-stellig, ≤ 6-stellig, ≤ 5-stellig oder ≤ 4-stellig).

Das temporäre Fahrzeugindikationskennzeichen kann von den Sender-Fahrzeug 14 auf unterschiedliche Art und Weise erstellt werden. Beispielsweise kann das Sender-Fahrzeug 14 einen Pool an temporären Sicherheitszertifikaten zum Signieren der Platoon-Nachrichten 20 und/oder der Leitstellen-Nachrichten 22 aufweisen. Es ist möglich, dass jeweils ein Sicherheitszertifikat für einen begrenzten Zeitraum aktiv ist und danach ein weiteres Sicherheitszertifikat aus dem Pool aktiviert wird usw. Das temporäre Fahrzeugindikationskennzeichen kann von dem jeweils aktiven temporären Sicherheitszertifikat abgeleitet sein, zum Beispiel von einer Kennung des Sicherheitszertifikats. Wird das temporäre Sicherheitszertifikat von dem Sender Fahrzeug 14 gewechselt, so kann auch das temporäre Fahrzeugidentifikationskennzeichen gewechselt werden.

Es ist möglich, dass das temporäre Sicherheitszertifikat nach Eintreten einer vorbestimmten Bedingung gewechselt wird, wie hierin allgemein für den Wechsel des temporären Fahrzeugidentifikationskennzeichens beschrieben ist.

In bestimmten Situationen kann das Wiederholen des Erstellens des temporären Fahrzeugidentifikationskennzeichens beispielsweise für eine vorbestimmte Zeitdauer ausgesetzt werden. Die Situationen können insbesondere dann bestehen, wenn eine zuverlässige Kommunikation zwischen den Fahrzeugen 12, 14, 16 des Fahrzeug-Platoons 10 besonders wichtig ist. Beispiele für solche Situationen können verkehrssicherheitskritische oder platoonverändernde Situationen sein. Eine verkehrssicherheitskritische Situation kann beispielsweise dann bestehen, wenn von einem der Fahrzeuge 12, 14, 16 ein Hindernis, eine Vollbremsung eines vorausfahrenden Fahrzeugs, ein Schaden an einem der Fahrzeuge 12, 14, 16 oder Ähnliches erfasst wird. Eine platoonverändernde Situation kann beispielsweise dann bestehen, wenn ein weiteres Fahrzeug (nicht dargestellt) sich dem Fahrzeug-Platoon 10 anschließt bzw. anschließen will oder eines der Fahrzeuge 12, 14, 16 das Fahrzeug-Platoon 10 verlässt bzw. verlassen will.

Die Leitstellen-Nachricht 22 des Sender-Fahrzeugs 14 an die Platoon-Leitstelle 18 kann ebenfalls das temporäre Fahrzeugidentifikationskennzeichen aufweisen. Die Leitstellen-Nachricht 22 kann zusätzlich eine aktuelle geographische Position des Sender-Fahrzeugs 14 aufweisen. Die aktuelle geographische Position des Sender-Fahrzeugs 14 kann beispielsweise mittels einer Standortbestimmungsvorrichtung (zum Beispiel GPS-Standortbestimmungsvorrichtung) des Sender-Fahrzeugs 14 ermittelt werden. Beispielsweise kann die Leitstellen-Nachricht 22 einen Identifikationsabschnitt aufweisen, der von der Platoon-Leitstelle 18 ausgewertet werden kann, um das Sender-Fahrzeug 14 als den Sender der Leitstelle-Nachricht 22 zu identifizieren. Der Identifikationsabschnitt kann das temporäre Fahrzeugidentifikationskennzeichen und die aktuelle geographische Position des Sender-Fahrzeugs 14 aufweisen.

Es ist auch möglich, dass die Leitstellen-Nachricht 22 des Sender-Fahrzeugs 14 die globale eindeutige Fahrzeugidentifikationsnummer (VIN) aufweist.

Ähnlich zu der Platoon-Nachricht 20 kann auch die Leitstellen-Nachricht 22 nicht nur das aktuelle temporäre Fahrzeugidentifikationskennzeichen aufweisen, sondern zusätzlich mindestens ein vorheriges Fahrzeugidentifikationskennzeichen. Zweckmäßig können alle vorherigen Fahrzeugidentifikationskennzeichen des Sender-Fahrzeugs 14, die seit der letzten Leitstellen-Nachricht 22 gegolten haben, in der Leitstelle-Nachricht 22 umfasst sein. Die Platoon-Leitstelle 22 kann somit Änderungen zu dem zuletzt bekannten temporären Fahrzeugidentifikationskennzeichen des Sender-Fahrzeugs 14 nachvollziehen. Durch die zusätzliche Berücksichtigung der aktuellen Position des Sender-Fahrzeugs 14 kann auch bei sehr großen Fahrzeugflotten, die von der Platoon-Leitstelle 18 betrieben werden, eine eindeutige Identifizierung des Sender-Fahrzeugs 14 vorgenommen werden, insbesondere aus einer Kenntnis über die von dem Fahrzeug-Platoon 10 geplanten Route.

Zusätzlich zu dem fahrzeugspezifischen temporären Fahrzeugidentifikationskennzeichen kann für die Kommunikation zusätzlich ein bspw. temporäres Platoon-Identifikationskennzeichen in zumindest einigen der Platoon-Nachrichten 20 und/oder den Leitstellen-Nachrichten 22 umfasst sein. Das Platoon-Identifikationskennzeichen kann das Fahrzeug-Platoon 10 identifizieren. Beispielsweise kann das Platoon-Identifikationskennzeichen für eine Zeitdauer des Bestehens des Fahrzeug-Platoons 10 temporär bestehen oder während des Bestehens des Fahrzeug-Platoons 10 gewechselt werden. Das Platoon-Identifikationskennzeichen kann wie das Fahrzeugidentifikationskennzeichen gebildet sein. Vorzugsweise kann das Platoon-Identifikationskennzeichen von einem früheren temporären Fahrzeugidentifikationskennzeichen eines Führungsfahrzeugs des Fahrzeug-Platoons 10 abgeleitet sein oder diesem entsprechen.

Beispielsweise kann die Platoon-Leitstelle 18 eine Liste aller Fahrzeuge der Flotte verwalten und ständig aktualisieren. In der Liste können die aktuellen Positionen aller Fahrzeuge sowie aktuelle bzw. zuletzt bekannte Fahrzeugidentifikationskennzeichen und ggf. Platoon-Identifikationskennzeichen aufgeführt sein.

Es ist möglich, dass das Fahrzeug-Identifikationskennzeichen und/oder das Platoon-Identifikationskennzeichen von weiteren Fahrzeugen oder Fahrzeug-Platoons außerhalb des Fahrzeug-Platoons 10 genutzt werden, um mit dem Fahrzeug-Platoon 10 oder der Platoon-Leitstelle 18 zu kommunizieren und bspw. ein Anschließen bzw. elektronisches Ankoppeln an das Fahrzeug-Platoon 10 zu organisieren.

In einer Variante kann ein weiteres Fahrzeug-Platoon (oder ein weiteres Fahrzeug) in der Nähe des Fahrzeug-Platoons 10 das Platoon-Identifikationskennzeichen und/oder das temporäre Fahrzeugidentifikationskennzeichen des Fahrzeugs 14, z. B. aus einer Nachricht des Fahrzeug-Platoons 10, erfassen. Das weitere Fahrzeug-Platoon kann das erfasste Platoon-Identifikationskennzeichen des Fahrzeug-Platoons 10 und/oder das temporäre Fahrzeugidentifikationskennzeichen des Fahrzeugs 14 an dessen eigene Platoon-Leitstelle senden, z. B. zusammen mit weiteren Informationen (z. B. eigenes Platoon-Identifikationskennzeichen, geografische Position usw.), um eine Erlaubnis zum elektronischen Ankoppeln an das Fahrzeug-Platoon 10 einzuholen. Die Platoon-Leitstelle des weiteren Fahrzeug-Platoons kann dann basierend auf dem Platoon-Identifikationskennzeichen des Fahrzeug-Platoons 10 und/oder das temporäre Fahrzeugidentifikationskennzeichen des Fahrzeugs 14 die Platoon-Leitstelle 18 identifizieren und mit dieser ein elektronisches Ankoppeln des weiteren Fahrzeug-Platoons an das Fahrzeug-Platoon 10 verhandeln.

In einer anderen Variante führt die Platoon-Leitstelle 18 (und auch andere Platoon-Leitstellen) eine Liste, auf der Fahrzeuge und/oder fahrzeug-Platoons aufgelistet sind, die sich an den Fahrzeug-Platoons der Platoon-Leitstelle 18 elektronisch ankoppeln dürfen. Die Liste kann bspw. jeweils auf bestimmte geografische Gebiete bezogen sein. Die Listen können fortwährend aktualisiert werden, z. B. wenn sich Fahrzeugidentifikationskennzeichen oder Platoon-Identifikationskennzeichen ändern usw. Die Listen werden mit den Platoons, die der jeweiligen Platoon-Leitstelle 18 zugeordnet sind, geteilt. Empfängt das Fahrzeug-Platoon 10 bspw. ein temporäres Fahrzeugidentifikationskennzeichen oder Platoon-Identifikationskennzeichen von einem weiteren Fahrzeug-Platoon in der Nähe, z. B. aus einer Nachricht des weiteren Fahrzeug-Platoons, so kann ein Abgleich mit der empfangenen Liste vorgenommen werden, um zu prüfen, ob ein elektronisches Ankoppeln an das weitere Fahrzeug-Platoon erlaubt ist oder nicht.

In einer weiteren Variante kann es einem weiteren Fahrzeug außerhalb des Fahrzeug-Platoons auch zunächst erlaubt sein, sich dem Fahrzeug-Platoon 10 anschließen bzw. elektronisch anzukoppeln. Wenn das weitere Fahrzeug Teil des Fahrzeug-Platoons 10 ist, kann das weitere Fahrzeug mit der Platoon-Leitstelle 18 verhandeln, ob es Teil des Fahrzeug-Platoons 10 bleiben darf oder dieses verlassen muss.

Die Erfindung ist nicht auf die vorstehend beschriebenen bevorzugten Ausführungsbeispiele beschränkt. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Fahrzeug-Platoon
- 12: (Empfänger-) Fahrzeug
- 14: (Sender-) Fahrzeug
- 16: (Empfänger-) Fahrzeug
- 18: Platoon-Leitstelle
- 20: Platoon-Nachricht
- 22: Leitstellen-Nachricht

## Patentansprüche

1. Verfahren zur Kommunikation zum Betreiben eines Fahrzeug-Platoons (10), aufweisend:
Erstellen eines temporären Fahrzeugidentifikationskennzeichens durch ein Sender-Fahrzeug (14) des Fahrzeug-Platoons (10);
Erstellen einer Platoon-Nachricht (20) an das Fahrzeug-Platoon (10) durch das Sender-Fahrzeug (14), wobei die Platoon-Nachricht (20) das temporäre Fahrzeugidentifikationskennzeichen zum Identifizieren des Sender-Fahrzeugs (14) als Sender der Platoon-Nachricht (20) aufweist; und
Versenden der Platoon-Nachricht (20) durch das Sender-Fahrzeug (14) an das Fahrzeug-Platoon (10),
wobei:
die Platoon-Nachricht (20) mittels eines temporären Sicherheitszertifikats des Sender-Fahrzeugs (14) signiert ist; und
das temporäre Fahrzeugidentifikationskennzeichen von dem temporären Sicherheitszertifikat abgeleitet ist, vorzugsweise von einer Kennung des temporären Sicherheitszertifikats.

2. Verfahren nach Anspruch 1, wobei:
das Erstellen des temporären Fahrzeugidentifikationskennzeichens fortwährend wiederholt wird; und
das neu erstellte temporäre Fahrzeugidentifikationskennzeichen das jeweils zuvor erstellte temporäre Fahrzeugidentifikationskennzeichen ersetzt.

3. Verfahren nach Anspruch 2, wobei:
das Erstellen des temporären Fahrzeugidentifikationskennzeichens jeweils nach Eintritt einer vorbestimmten Bedingung wiederholt wird,
wobei vorzugsweise die vorbestimmte Bedingung aufweist:
Verstreichen einer vorbestimmten Zeit, vorzugsweise ≤ 30 min, ≤ 15 min, ≤ 10 min, ≤ 5 min, ≤ 3 min, ≤ 90 s oder ≤ 60 s; und/oder
Zurücklegen einer vorbestimmten Strecke durch das Sender-Fahrzeug (14) oder das Fahrzeug-Platoon (10); und/oder
Anlassen des Sender-Fahrzeugs (14); und/oder
Wechseln eines Sicherheitszertifikats des Sender-Fahrzeugs (14), vorzugsweise zur signierten und/oder verschlüsselten Kommunikation.

4. Verfahren nach Anspruch 2 oder Anspruch 3, wobei:
das Wiederholen des Erstellens des temporären Fahrzeugidentifikationskennzeichens, vorzugsweise für eine vorbestimmte Zeitdauer, ausgesetzt wird, wenn das Sender-Fahrzeug (14) ein Auftreten einer verkehrssicherheitskritischen und/oder platoonverändernden Situation für das Fahrzeug-Platoon (10) und/oder das Sender-Fahrzeug (14) ermittelt, empfängt oder erfasst.

5. Verfahren nach einem der vorherigen Ansprüche, wobei:
die Platoon-Nachricht (20) zusätzlich das zuvor erstellte temporäre Fahrzeugidentifikationskennzeichen zum Identifizieren des Sender-Fahrzeugs (14) als Sender der Platoon-Nachricht (20) aufweist.

6. Verfahren nach einem der vorherigen Ansprüche, ferner aufweisend:
Ermitteln einer geografischen Position des Sender-Fahrzeugs (14); und
Versenden einer Leitstellen-Nachricht (22) an eine Platoon-Leitstelle (18), wobei die Leitstellen-Nachricht (22) einen Identifikationsabschnitt zur Identifikation des Sender-Fahrzeugs (14) aufweist, und der Identifikationsabschnitt das temporäre Fahrzeugidentifikationskennzeichen und die erfasste geografische Position des Sender-Fahrzeugs (14) aufweist.

7. Verfahren zur Kommunikation zum Betreiben eines Fahrzeug-Platoons (10), aufweisend:
Empfangen einer Platoon-Nachricht (20) von einem Sender-Fahrzeug (14) des Fahrzeug-Platoons (10) durch ein Empfänger-Fahrzeug (12, 16) des Fahrzeug-Platoons (10), wobei die Platoon-Nachricht (20) ein temporäres Fahrzeugidentifikationskennzeichen des Sender-Fahrzeugs (14) des Fahrzeug-Platoons (10) aufweist; und
Identifizieren des Sender-Fahrzeugs (14) als Sender der Platoon-Nachricht (20) durch das Empfänger-Fahrzeug (12, 16) basierend auf dem temporären Fahrzeugidentifikationskennzeichen der Platoon-Nachricht (20),
wobei:
die Platoon-Nachricht (20) mittels eines temporären Sicherheitszertifikats des Sender-Fahrzeugs (14) signiert ist; und
das temporäre Fahrzeugidentifikationskennzeichen von dem temporären Sicherheitszertifikat abgeleitet ist, vorzugsweise von einer Kennung des temporären Sicherheitszertifikats.

8. Verfahren nach Anspruch 7, wobei:
die Platoon-Nachricht (20) zusätzlich ein vorheriges temporäres Fahrzeugidentifikationskennzeichen des Sender-Fahrzeugs (14) des Fahrzeug-Platoons (10) aufweist; und
das Identifizieren des Sender-Fahrzeugs (14) als Sender der Platoon-Nachricht (20) durch das Empfänger-Fahrzeug (12, 16) zusätzlich auf dem vorherigen temporären Fahrzeugidentifikationskennzeichen basiert.

9. Verfahren zur Kommunikation zum Betreiben eines Fahrzeug-Platoons (10), aufweisend:
Empfangen einer Leitstellen-Nachricht (22) von einem Sender-Fahrzeug (14) des Fahrzeug-Platoons (10) durch eine Platoon-Leitstelle (18), wobei die Leitstellen-Nachricht (22) einen Identifikationsabschnitt zur Identifikation des Sender-Fahrzeugs (14) aufweist, und der Identifikationsabschnitt ein temporäres Fahrzeugidentifikationskennzeichen des Sender-Fahrzeugs (14) und eine geografische Position des Sender-Fahrzeugs (14) aufweist;
Identifizieren des Sender-Fahrzeugs (14) durch die Platoon-Leitstelle (18) basierend auf dem temporären Fahrzeugidentifikationskennzeichen und der geografischen Position der Leitstellen-Nachricht (22),
wobei die Leitstellen-Nachricht (22) mittels eines temporären Sicherheitszertifikats des Sender-Fahrzeugs (14) signiert ist; und
das temporäre Fahrzeugidentifikationskennzeichen von dem temporären Sicherheitszertifikat abgeleitet ist, vorzugsweise von einer Kennung des temporären Sicherheitszertifikats, vorzugsweise von einer Kennung des temporären Sicherheitszertifikats.

10. Verfahren nach Anspruch 9, wobei:
der Identifikationsabschnitt zusätzlich mindestens ein vorheriges temporäres Fahrzeugidentifikationskennzeichen des Sender-Fahrzeugs (14) aufweist; und
das Identifizieren des Sender-Fahrzeugs (14) zusätzlich auf dem mindestens einen vorherigen temporären Fahrzeugidentifikationskennzeichen basiert.

11. Verfahren nach einem der vorherigen Ansprüche, wobei:
das temporären Fahrzeugidentifikationskennzeichen ungleich zu einer globalen eindeutigen Fahrzeugidentifikationsnummer des Sender-Fahrzeugs (14) ist, vorzugweise kürzer als die globale eindeutige Fahrzeugidentifikationsnummer ist; und/oder
das temporären Fahrzeugidentifikationskennzeichen ≤ 8-stellig, ≤ 7-stellig, ≤ 6-stellig, ≤ 5-stellig oder ≤ 4-stellig ist.

12. Verfahren nach einem der vorherigen Ansprüche, wobei:
das temporäre Sicherheitszertifikat des Sender-Fahrzeugs (14) fortwährend ausgetauscht wird; und
das temporäre Fahrzeugidentifikationskennzeichen jeweils vom aktuellen temporären Sicherheitszertifikat abgeleitet ist.

13. Verfahren nach einem der vorherigen Ansprüche, wobei:
die Platoon-Nachricht (20) oder die Leitstellen-Nachricht (22) zusätzlich ein Platoon-Identifikationskennzeichen zum Identifizieren des Fahrzeug-Platoons (10) des Sender-Fahrzeugs (14) aufweist,
wobei vorzugsweise:
das Platoon-Identifikationskennzeichen von einem früheren temporären Fahrzeugidentifikationskennzeichen eines Führungsfahrzeugs des Fahrzeug-Platoons (10) abgeleitet ist oder diesem entspricht.

14. Verfahren nach einem der vorherigen Ansprüche, ferner aufweisend:
Empfangen der Platoon-Nachricht (20) durch mindestens ein weiteres Fahrzeug oder ein weiteres Fahrzeug-Platoon (10), das beabsichtigt, an das Fahrzeug-Platoon (10) anzukoppeln, oder das gerade an das Fahrzeug-Platoon (10) ankoppelt, wobei das mindestens eine weitere Fahrzeug oder das weitere Fahrzeug-Platoon (10) das Platoon-Identifikationskennzeichen und/oder das temporäre Fahrzeugidentifikationskennzeichen zum Identifizieren des Fahrzeug-Platoons (10) zum Einholen oder Prüfen einer Erlaubnis zum Ankoppeln an das Fahrzeug-Platoon (10) verwendet.

15. Steuereinheit für ein Kraftfahrzeug, vorzugsweise Nutzfahrzeug,), wobei die Steuereinheit dazu ausgebildet ist, ein Verfahren nach einem der Ansprüche 1 bis 8 auszuführen.

16. Steuereinheit für eine Platoon-Leitstelle (18), wobei die Steuereinheit dazu ausgebildet ist, ein Verfahren nach einem Ansprüche 9, 10, 11, 12 oder 13 auszuführen.

## Claims

1. A method for communicating for operating a vehicle platoon (10), comprising:
establishing a temporary vehicle identification tag by a sender vehicle (14) of the vehicle platoon (10);
creating a platoon message (20) to the vehicle platoon (10) by the sender vehicle (14), the platoon message (20) comprising the temporary vehicle identification tag for identifying the sender vehicle (14) as the sender of the platoon message (20); and
sending the platoon message (20) by the sender vehicle (14) to the vehicle platoon (10),
wherein:
the platoon message (20) is signed using a temporary security certificate of the sender vehicle (14); and
the temporary vehicle identification tag is derived from the temporary security certificate, preferably from an identifier of the temporary security certificate.

2. The method of claim 1, wherein:
the creating of the temporary vehicle identification tag is continuously repeated; and
the newly created temporary vehicle identification tag replaces the previously created temporary vehicle identification tag.

3. The method of claim 2, wherein:
the creating of the temporary vehicle identification tag is repeated each time a predetermined condition occurs,
wherein preferably said predetermined condition comprises:
elapsing of a predetermined time, preferably ≤ 30 min, ≤ 15 min, ≤ 10 min, ≤ 5 min, ≤ 3 min, ≤ 90 s or ≤ 60 s; and/or
travelling a predetermined distance by the sender vehicle (14) or the vehicle platoon (10); and/or
starting the sender vehicle (14); and/or
changing a security certificate of the sender vehicle (14), preferably for signed and/or encrypted communication.

4. The method of claim 2 or claim 3, wherein:
the repeating of the creating of the temporary vehicle identification tag is suspended, preferably for a predetermined period of time, when the sender vehicle (14) detects, receives or senses an occurrence of a traffic safety critical and/or platoon changing situation for the vehicle platoon (10) and/or the sender vehicle (14).

5. The method of any one of the preceding claims, wherein:
the platoon message (20) additionally comprises the previously created temporary vehicle identification tag for identifying the sender vehicle (14) as the sender of the platoon message (20).

6. The method of any one of the preceding claims, further comprising:
determining a geographical position of the sender vehicle (14); and
sending a control centre message (22) to a platoon control centre (18), the control centre message (22) comprising an identification section for identifying the sender vehicle (14), the identification section comprising the temporary vehicle identification tag and the detected geographical position of the sender vehicle (14).

7. A method for communicating for operating a vehicle platoon (10), comprising:
receiving a platoon message (20) from a sender vehicle (14) of the vehicle platoon (10) by a receiver vehicle (12, 16) of the vehicle platoon (10), the platoon message (20) comprising a temporary vehicle identification tag of the sender vehicle (14) of the vehicle platoon (10); and
identifying the sender vehicle (14) as the sender of the platoon message (20) by the receiver vehicle (12, 16) based on the temporary vehicle identification tag of the platoon message (20),
wherein:
the platoon message (20) is signed by means of a temporary security certificate of the sender vehicle (14); and
the temporary vehicle identification tag is derived from the temporary security certificate, preferably from an identifier of the temporary security certificate.

8. The method of claim 7, wherein:
the platoon message (20) additionally comprises a previous temporary vehicle identification tag of the sender vehicle (14) of the vehicle platoon (10); and
the identifying of the sender vehicle (14) as the sender of the platoon message (20) by the receiver vehicle (12, 16) is additionally based on the previous temporary vehicle identification tag.

9. A method for communicating for operating a vehicle platoon (10), comprising:
receiving, by a platoon control centre (18), a control centre message (22) from a sender vehicle (14) of the vehicle platoon (10), the control centre message (22) comprising an identification section for identifying the sender vehicle (14), the identification section comprising a temporary vehicle identification tag of the sender vehicle (14) and a geographical position of the sender vehicle (14);
identifying the sender vehicle (14) by the platoon control centre (18) based on the temporary vehicle identification tag and the geographical position of the control centre message (22),
wherein the control centre message (22) is signed by means of a temporary security certificate of the sender vehicle (14); and
the temporary vehicle identification tag is derived from the temporary security certificate, preferably from an identifier of the temporary security certificate, preferably from an identifier of the temporary security certificate.

10. The method of claim 9, wherein:
the identification section additionally comprises at least one previous temporary vehicle identification tag of the sender vehicle (14); and
the identifying the sender vehicle (14) is additionally based on the at least one previous temporary vehicle identification tag.

11. The method of any one of the preceding claims, wherein:
the temporary vehicle identification tag is unequal to a global unique vehicle identification number of the sender vehicle (14), preferably shorter than the global unique vehicle identification number; and/or
the temporary vehicle identification tag is ≤ 8-digits, ≤ 7-digits, ≤ 6-digits, ≤ 5-digits or ≤ 4-digits.

12. The method of any one of the preceding claims, wherein:
the temporary security certificate of the sender vehicle (14) is continuously replaced; and
the temporary vehicle identification tag is derived from the current temporary security certificate.

13. The method of any one of the preceding claims, wherein:
the platoon message (20) or the control centre message (22) additionally comprises a platoon identification tag for identifying the vehicle platoon (10) of the sender vehicle (14),
wherein preferably:
the platoon identification tag is derived from or corresponds to a previous temporary vehicle identification tag of a lead vehicle of the vehicle platoon (10).

14. The method of any one of the preceding claims, further comprising:
receiving the platoon message (20) by at least one further vehicle or a further vehicle platoon (10) intending to dock with the vehicle platoon (10) or currently docking with the vehicle platoon (10), wherein the at least one further vehicle or the further vehicle platoon (10) uses the platoon identification tag and/or the temporary vehicle identification tag to identify the vehicle platoon (10) for obtaining or checking permission to dock with the vehicle platoon (10).

15. A control unit for a motor vehicle, preferably a utility vehicle, the control unit being configured to perform a method according to any one of claims 1 to 8.

16. A control unit for a platoon control centre (18), wherein the control unit is configured to perform a method according to any one of claims 9, 10, 11, 12 or 13.

## Revendications

1. Procédé de communication permettant de faire fonctionner un peloton de véhicules (10), comportant les éléments suivants :
élaboration d'une caractéristique d'identification de véhicule temporaire par un véhicule émetteur (14) du peloton de véhicules (10) ;
élaboration d'un message de peloton (20) au niveau du peloton de véhicules (10) par le véhicule émetteur (14), dans lequel le message de peloton (20) comporte la caractéristique d'identification de véhicule temporaire permettant l'identification du véhicule émetteur (14) comme émetteur du message de peloton (20) ; et
envoi du message de peloton (20) par le véhicule émetteur (14) au niveau du peloton de véhicules (10) ;
dans lequel :
le message de peloton (20) est signé à l'aide d'un certificat de sécurité temporaire du véhicule émetteur (14) ; et
la caractéristique d'identification de véhicule temporaire est dérivée du certificat de sécurité temporaire, de préférence d'un marqueur du certificat de sécurité temporaire.

2. Procédé selon la revendication 1, dans lequel :
l'élaboration de la caractéristique d'identification de véhicule temporaire est constamment répétée ; et
la caractéristique d'identification de véhicule temporaire nouvellement élaborée remplace la caractéristique d'identification de véhicule temporaire respectivement précédemment élaborée.

3. Procédé selon la revendication 2, dans lequel :
l'élaboration de la caractéristique d'identification de véhicule temporaire est respectivement répétée après entrée d'une condition prédéfinie ;
dans lequel de préférence la condition prédéfinie comporte les éléments suivants :
écoulement d'une durée prédéfinie, de préférence < 30 min, < 15 min, < 10 min, < 5 min, < 3 min, < 90 s ou < 60 s ; et/ou
parcours d'un tronçon prédéfini par le véhicule émetteur (14) ou le peloton de véhicules (10) ; et/ou démarrage du véhicule émetteur (14) ; et/ou échange d'un certificat de sécurité du véhicule émetteur (14), de préférence en vue d'une communication signée et/ou codée.

4. Procédé selon la revendication 2 ou la revendication 3, dans lequel :
la répétition de l'élaboration de la caractéristique d'identification de véhicule temporaire, de préférence pour une durée prédéfinie, est interrompue lorsque le véhicule émetteur (14) calcule, reçoit ou détecte une survenue d'une situation critique en matière de sécurité sur le plan du trafic et/ou modifiant le peloton pour le peloton de véhicules (10) et/ou le véhicule émetteur (14).

5. Procédé selon l'une quelconque des revendications précédentes, dans lequel :
le message de peloton (20) comporte en outre la caractéristique d'identification de véhicule temporaire précédemment élaborée permettant l'identification du véhicule émetteur (14) comme émetteur du message de peloton (20).

6. Procédé selon l'une quelconque des revendications précédentes, comportant en outre les éléments suivants :
calcul d'une position géographique du véhicule émetteur (14) ; et
envoi d'un message du centre de régulation (22) à une position de peloton (18), dans lequel le message du centre de régulation (22) comporte une section d'identification servant à l'identification du véhicule émetteur (14) et la section d'identification comportant la caractéristique d'identification de véhicule temporaire et la position géographique détectée du véhicule émetteur (14).

7. Procédé de communication permettant de faire fonctionner un peloton de véhicules (10), comportant les éléments suivants :
réception d'un message de peloton (20) par un véhicule émetteur (14) du peloton de véhicules (10) par un véhicule récepteur (12, 16) du peloton de véhicules (10),
dans lequel le message de peloton (20) comporte une caractéristique d'identification de véhicule temporaire du véhicule émetteur (14) du peloton de véhicules (10) ; et
identification du véhicule émetteur (14) comme émetteur du message de peloton (20) par le véhicule récepteur (12, 16) sur la base de la caractéristique d'identification de véhicule temporaire du message de peloton (20), dans lequel :
le message de peloton (20) est signé à l'aide d'un certificat de sécurité temporaire du véhicule émetteur (14) ; et
la caractéristique d'identification de véhicule temporaire est dérivée du certificat de sécurité temporaire, de préférence d'un marqueur du certificat de sécurité temporaire.

8. Procédé selon la revendication 7, dans lequel :
le message de peloton (20) comporte en outre une caractéristique d'identification de véhicule temporaire précédente du véhicule émetteur (14) du peloton de véhicules (10) ; et
l'identification du véhicule émetteur (14) comme émetteur du message de peloton (20) par le véhicule récepteur (12, 16) est en outre basée sur la caractéristique d'identification de véhicule temporaire précédente.

9. Procédé de communication permettant de faire fonctionner un peloton de véhicules (10), comportant les éléments suivants :
réception d'un message du centre de régulation (22) provenant d'un véhicule émetteur (14) du peloton de véhicules (10) au travers d'une position de peloton (18), dans lequel le message du centre de régulation (22) comporte une section d'identification servant à l'identification du véhicule émetteur (14) ; et
la section d'identification comporte une caractéristique d'identification de véhicule temporaire du véhicule émetteur (14) et une position géographique du véhicule émetteur (14) ;
identification du véhicule émetteur (14) au travers de la position de peloton (18) sur la base de la caractéristique d'identification de véhicule temporaire et de la position géographique du message du centre de régulation (22) ;
dans lequel le message du centre de régulation (22) est signé à l'aide d'un certificat de sécurité temporaire du véhicule émetteur (14) ; et
la caractéristique d'identification de véhicule temporaire est dérivée du certificat de sécurité temporaire, de préférence d'un marqueur du certificat de sécurité temporaire, de préférence d'un marqueur du certificat de sécurité temporaire.

10. Procédé selon la revendication 9, dans lequel :
la section d'identification comporte en outre au moins une caractéristique d'identification de véhicule temporaire précédente du véhicule émetteur (14) ; et
l'identification du véhicule émetteur (14) est en outre basée sur l'au moins une caractéristique d'identification de véhicule temporaire précédente.

11. Procédé selon l'une quelconque des revendications précédentes, dans lequel :
la caractéristique d'identification de véhicule temporaire est différente d'une immatriculation de véhicule univoque mondiale du véhicule émetteur (14), de préférence plus courte que l'immatriculation de véhicule univoque mondiale ; et/ou
la caractéristique d'identification de véhicule temporaire est < 8 chiffres, < 7 chiffres, < 6 chiffres, < 5 chiffres ou < 4 chiffres.

12. Procédé selon l'une quelconque des revendications précédentes, dans lequel :
le certificat de sécurité temporaire du véhicule émetteur (14) est échangé en continu ; et
la caractéristique d'identification de véhicule temporaire est respectivement dérivée du certificat de sécurité temporaire actuel.

13. Procédé selon l'une quelconque des revendications précédentes, dans lequel :
le message de peloton (20) ou le message du centre de régulation (22) comporte en outre une caractéristique d'identification de peloton permettant l'identification du peloton de véhicules (10) du véhicule émetteur (14), dans lequel de préférence :
la caractéristique d'identification de peloton est dérivée d'une caractéristique d'identification de véhicule temporaire antérieure d'un véhicule guide du peloton de véhicules (10) ou correspond à celle-ci.

14. Procédé selon l'une quelconque des revendications précédentes, comportant en outre les éléments suivants : réception du message de peloton (20) par au moins un véhicule supplémentaire ou un peloton de véhicules (10) supplémentaire à coupler intentionnellement au peloton de véhicules (10) ou couplé directement au peloton de véhicules (10), dans lequel l'au moins un véhicule supplémentaire ou le peloton de véhicules (10) supplémentaire utilise la caractéristique d'identification de peloton et/ou la caractéristique d'identification de véhicule temporaire afin d'identifier le peloton de véhicules (10) afin de récupérer ou de vérifier une autorisation de couplage au peloton de véhicules (10).

15. Unité de commande pour un véhicule automobile, de préférence un véhicule utilitaire, dans laquelle l'unité de commande est réalisée pour exécuter un procédé selon l'une quelconque des revendications 1 à 8.

16. Unité de commande pour une position de peloton (18), dans laquelle l'unité de commande est réalisée pour exécuter un procédé selon l'une quelconque des revendications 9, 10, 11, 12 ou 13.
